Europäisches Patentamt

European Patent Office

Office européen des brevets

(11) Publication number: **0 087 272**

**A1**

(12) **EUROPEAN PATENT APPLICATION**

(21) Application number: **83300810.5**

(22) Date of filing: **17.02.83**

(51) Int. Cl.³: **G 01 N 1/20**

(30) Priority: **22.02.82 GB 8205196**

(43) Date of publication of application:
**31.08.83 Bulletin 83/35**

(84) Designated Contracting States:
**DE FR IT NL**

(71) Applicant: **Jiskoot Autocontrol Limited**
**85 Goods Station Road**
**Tunbridge Wells Kent TN1 2DJ(GB)**

(72) Inventor: **Jiskoot, Joost Jakob**
**85 Goods Station Road**
**Tunbridge Wells Kent TN1 2DJ(GB)**

(74) Representative: **Wright, Hugh Ronald**
**Brookes & Martin 52/54 High Holborn**
**London WC1V 6SE(GB)**

(54) **Sampler for pipeline or the like.**

(57) A sampler for a pipeline, for example, an oil pipeline which "grabs" a sample of fluid passing along the pipeline. The sampler includes a probe extending into the pipeline which has a chamber (18) through which fluid in the pipeline passes from an inlet (21) to an outlet (22). A tube (23) extends upstream from the inlet to try to ensure that fluid is collected from an undisturbed part of the flow of fluid through the pipeline.

Fig.1.

EP 0 087 272 A1

## SAMPLER FOR PIPELINE OR THE LIKE

The present invention relates to a sampler for a pipeline or the like. This sampler is not a continuous sampler but is of the type referred to as a "grab" sampler which grabs a sample of fluid from the pipeline at periodic intervals. The pipeline may be, for example, an oil pipeline and the representative sample of oil may be grabbed and removed from the pipeline to a sampling apparatus for analysis.

The present invention provides a sampler probe for insertion into a pipeline of fluid comprising a probe body for extending into the pipeline, a chamber through which, in use, the fluid in the pipeline passes, said chamber having a fluid inlet and a fluid outlet for communicating with the pipeline, and a fluid sample outlet through which the sampled fluid may be withdrawn from the chamber through the probe body and out of the pipeline, the fluid inlet comprising a tube for extending upstream from the probe body.

One advantage of such an arrangement is that, in use, the oil is collected by the tube before it enters the flow disturbed region around the probe itself. This additional turbulence in the fluid flow can mean that the fluid sample taken passing through the chamber will not be representative of the fluid as a whole. For example, this additional turbulence may cause separation of some components of a non-homogeneous fluid.

Also, the arrangement allows a substantial main probe stem which allows insertion into the middle third area of large bore pipes and the reduced area, offset sampling head with a forward extending collector tube ensures a minimum disturbance to the fluid flowing so that a typical sample is collected.

In a preferred arrangement the upstream edge of the tube is chamfered so as to disturb the fluid flow to the minimum extent possible and the tube is preferably of oval section. Particularly where the sampler probe is to be retractable out of the pipeline, the probe is arranged so that the part thereof containing the chamber and mounting the tube is mounted offset with respect to the axis of the bore in the wall of the pipeline through which the probe may be withdrawn so that the tube may also pass through the hole during withdrawal.

The large through flow passage combined with the unique three step action of (1) throughflow (2) isolate grab (3) remove grab, provides the near ideal requirement of iso kinetic - high frequency - sampling thus producing the desired result of a small volume representative sample.

In a preferred aspect of the invention the sampler probe as set out above may include a sample outlet valve in the fluid sample outlet provided immediately adjacent the chamber and means may be provided to open the sample outlet valve from outside the pipeline. A particularly preferred feature of this aspect of the invention is that it enables one to pass cleansing liquid or a purging gas from the outside of pipeline back down through the sample outlet and through the sample outlet valve to clean the outlet valve or purge any unwanted water without having to dismantle the sampler.

Preferably the fluid sample outlet communicates with a pressure relief valve which preferably comprises a first inlet connected to said fluid sample outlet, a second inlet connected to receive pipeline pressure, a movable wall means being provided between said first and second inlet and controlling a valve, and an outlet connected with said valve, whereby the sample may pass out of said outlet at a low pressure, pipeline pressure having been removed by the pressure regulator.

This pressure relief valve is particularly advantageous since no matter how the pressure in the pipeline varies, the fluid is delivered at a substantially constant low pressure. The other way of removing lime pressure from the sample would be by the use of, for example, a spring which would have to be of a very high tension, higher than the maximum likely to be obtained in the pipeline, and therefore the pressure of the sample from the outlet will vary considerably depending upon whether the lime pressure is at its maximum and close to the spring pressure or is at its minimum and considerably less than the spring pressure. In that case there will be local flashing in the case of low vapour pressure liquids and in the case of crude oil sampling this local flashing and subsequent inability to recondense can cause a variation in the liquid density on analysis.

A preferred arrangement of the invention will now be described by way of example only and with reference to the accompanying drawings in which

Figure 1 is an axial section through a part of a sampler probe incorporating a sampling chamber and which protrudes into a pipeline,

Figures 2 and 3 are axial sections similar to Figure 1 with some parts in a different position,

Figure 4 is a side view of part of the sampler probe of Figure 1 from the direction of arrow A,

Figure 5 is a sectional side view, in two parts, showing the method of mounting a sampler probe of a first type in the pipeline,

Figure 6 (in two parts) is a part sectional side view of a second type of the sampler probe assembly and,

Figure 7 is a cross section of a pressure regulator for use with the apparatus of Figures 1 to 6,

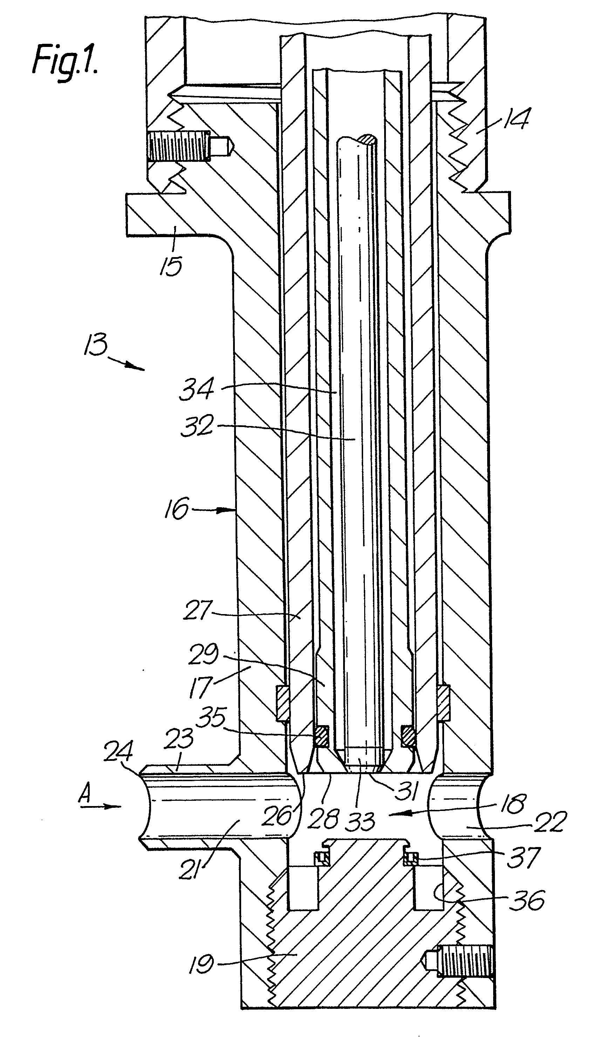

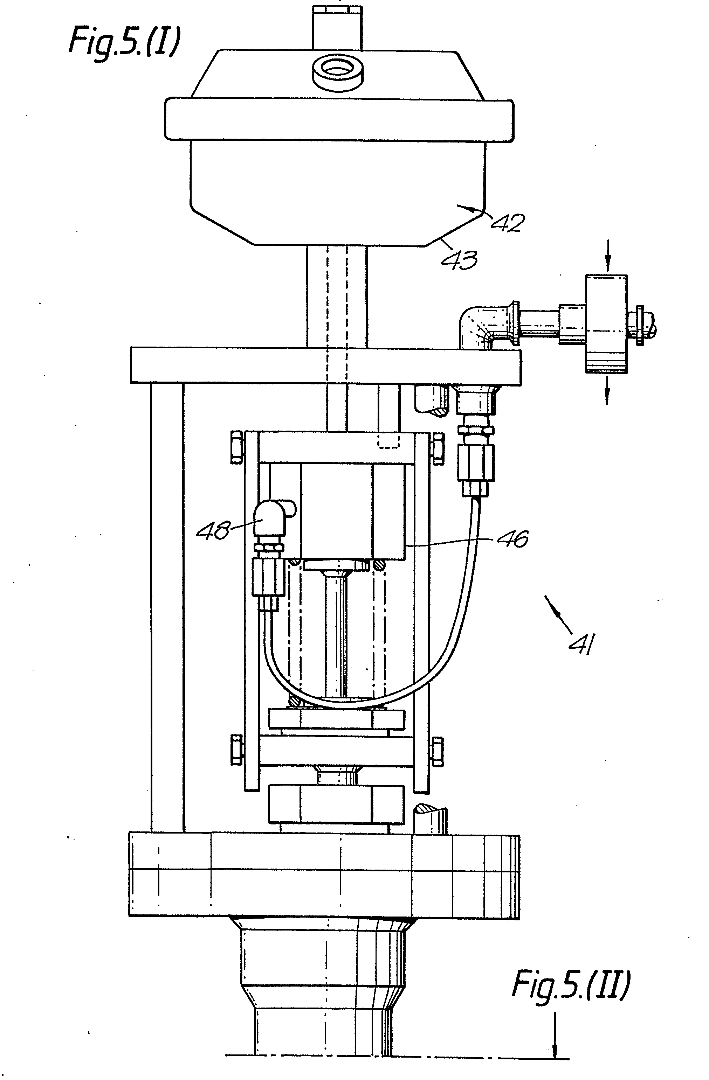

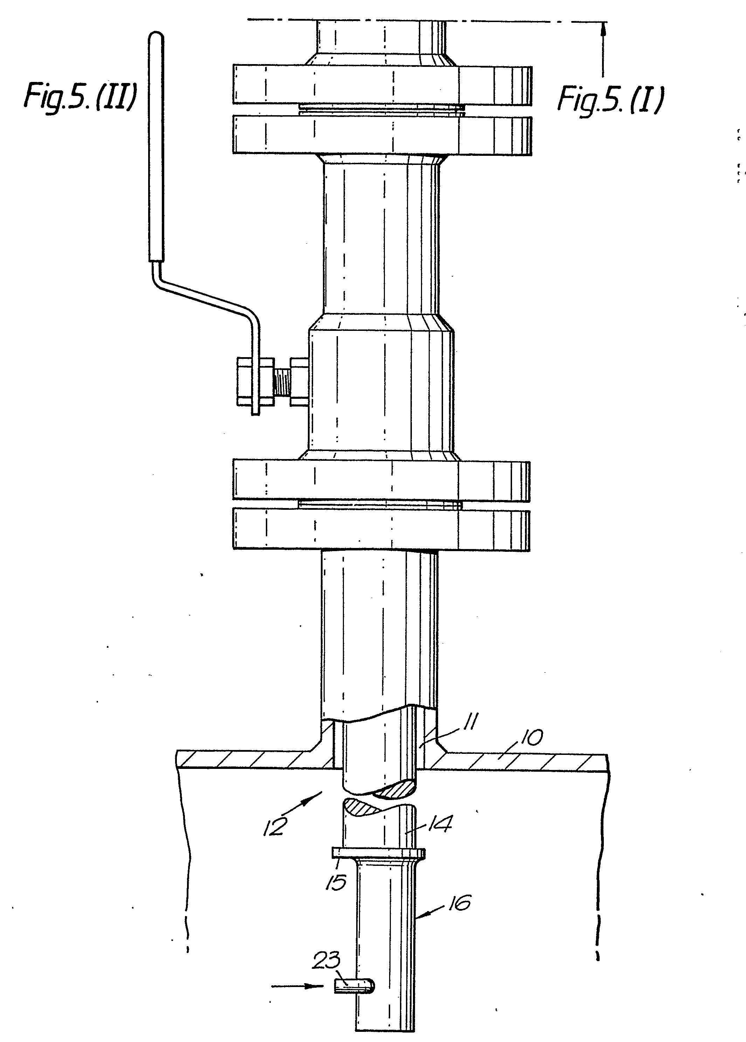

Referring to Figure 5 of the drawings, there is shown a pipeline wall section 10 having a hole 11 in which is mounted a sampler probe assembly 12, the sampler probe assembly 12 being mounted in the hole 11 in a sealing manner as is well known. In general terms Figures 1, 2, 3 and 4 show the part of the sampler probe assembly 12 inside the pipeline.

Referring to Figures 1, 2, 3 and 4 the sampler probe assembly comprises a sampler probe 13, and includes a rigid outer tube 14 of sufficient thickness and strength to withstand the flow of oil through the pipeline. To the lower end of the tube 14 is mounted the sampler section 16 comprising a circular cross section tube 17 which is offset with respect to the axis of the tube 14.

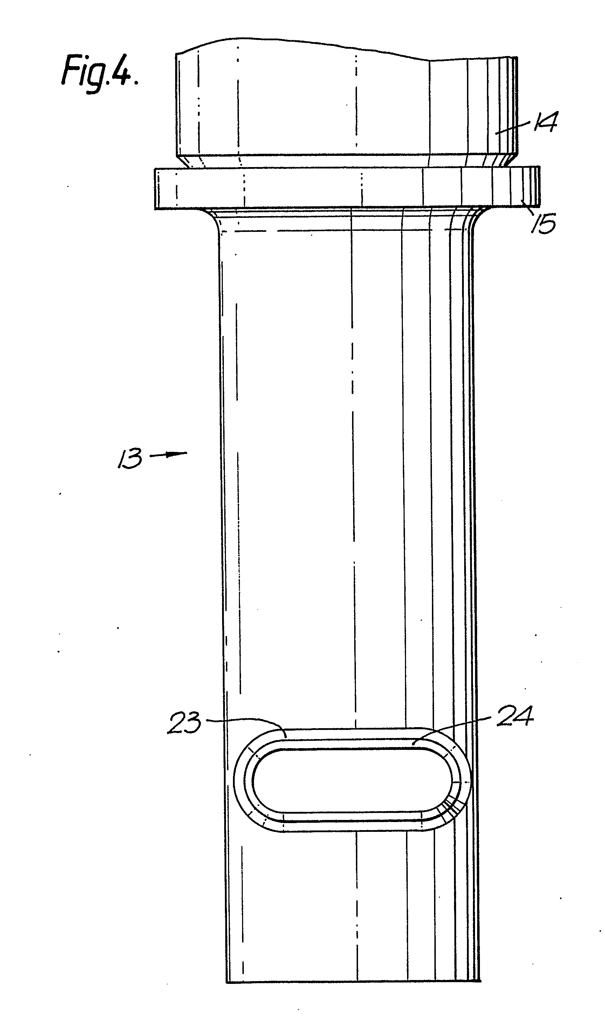

As is more clear from Figure 1 at the lower end of the sampler section 16, which is the portion which extends furthest into the pipeline, there is provided a chamber 18. The bottom of the chamber 18 is defined by a plug 19 mounted in the end of the tube 17. The chamber 18 has an inlet 21 and an outlet 22, the inlet 21 pointing upstream with respect to the direction of flow of oil through the pipeline so that oil passes through the inlet 21 through the chamber 18 and out of the outlet 22. Welded to the outside of the tube 17 is an inlet tube 23, the inner periphery of which corresponds to the inner periphery of the inlet 21, the inlet tube 23 extending upstream and its outer edge 24 being chamfered so as to minimise the disturbance of the oil flow through the inlet tube 23 and provide pitot entry. As can be seen from Figure 4, the cross section of the inlet tube 23 extends radially outwardly generally only as far as the periphery of the tube 14 or, at least, flange 15 connecting the tube 14 and the tube 17.

The upper surface of the chamber 18 is defined by the bottom edge 26 of a tubular sleeve 27, the bottom edge 28 of a tubular piston 29 and the bottom face 31 of a valve stem 32. The bottom face 31 is provided by a shaped resilient valve member 33. An annular passage 34 extends between the valve stem 32 and the tubular piston 29 and as is clear from the Figures 1, 2 and 3 the valve member 33 is shaped so as to sealingly engage with the bottom edge 28 of the tubular piston 29, to seal the annular passage 34 from the chamber 18. There is also provided an 0 ring seal 35 mounted in a slot in the outer surface of the tubular piston 29 to sealingly engage with the inner surface of the tubular sleeve 27.

The upper portion of the plug 19 includes an annular slot 36 of similar transverse dimensions to the tubular sleeve 27 and the inner surface of the annular slot 36 carries a continuous seal 37. Bores 40 prevent build up of dirt and wax in slot 36 by allowing it to drain away.

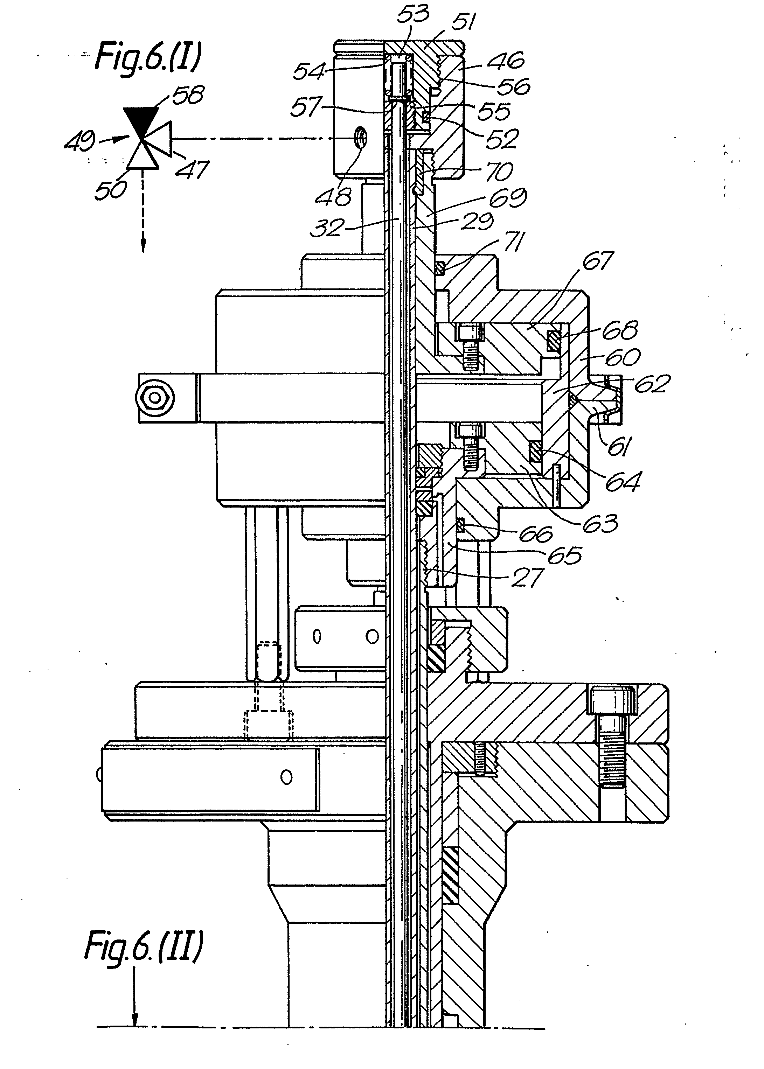

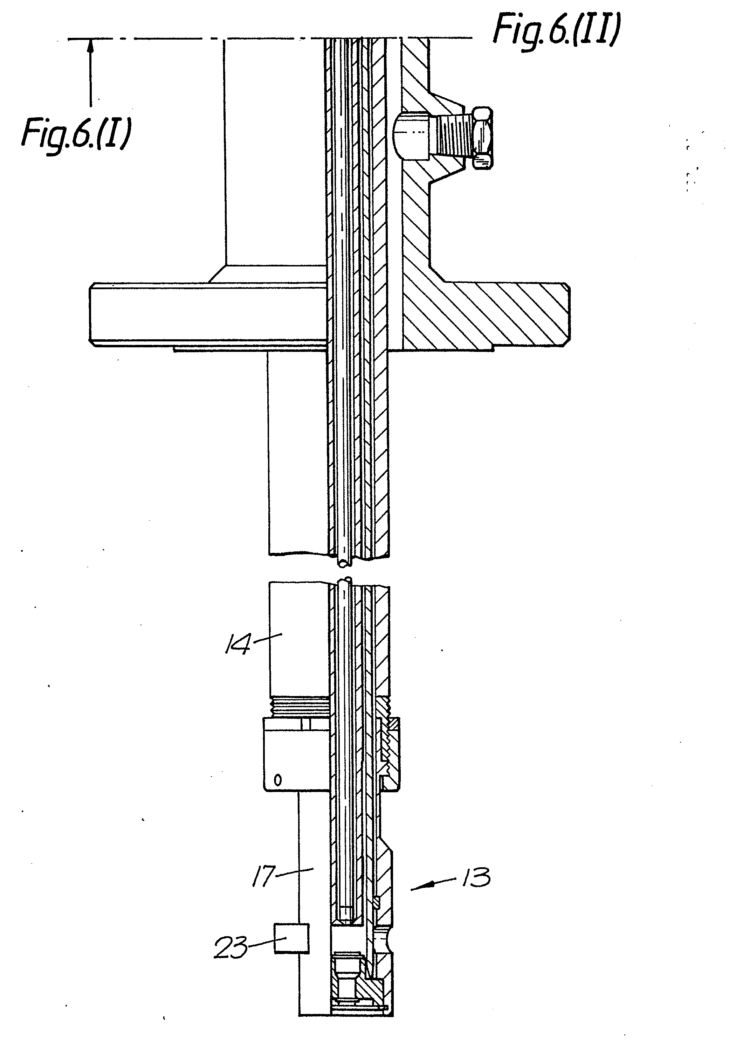

From Figures 5 and 6 it will be seen that the tube 14 extends upwardly outside the pipeline 10.

At 41 in Figures 5 and 6 there is illustrated the mechanism for retracting the probe assembly 12, details of which are not described here except to say that there is either provided an actuator 42 which rotates a screw mechanism 43 or there are provided two small bore long stroke hydraulic rams (to be described) which retracts or inserts the sampler probe 13 into and out of the pipeline.

It will be noted from Figures 1, 2 and 3 that the annular passage 34 extends upwardly through the sampler probe 13 and from Figure 6 it will be seen that this annular passage 34 extends into a piston head 46 and connects with a side passage to an outlet port 48. The outlet port 48 is connected by means of an adaptor (not shown) to the bottom port 47 of a three-way ball valve 49 (shown diagramatically) and a pressure relief valve 100. It will also be seen from Figure 6 that the valve stem 32 extends upwardly to the pulg 51.

From Figure 6, it is seen that the upper end of the valve stem 32 carries a circlip 57. The plug 47 is screwed into the sample tube piston head 46 on the threads 56. The inner end of the plug 51 carries an 0 ring 52 which seals the plug 51 to the piston head 46. The top end of the valve stem 32 projects into a blind bore 53 in the underside of the plug 51 and a light spring 54 extends between the inner end of the blind bore 53 and the circlip 57 thereby urging the valve stem 32 downwardly so that the valve member 33 is urged into engagement with the bottom edge 28 of the tubular piston 29. The blind bore 53 is threaded at its lower end. A nut 55 is screwed into the plug 47 to retain the circlip 51.

Figure 6 also shows the probe actuator assembly.

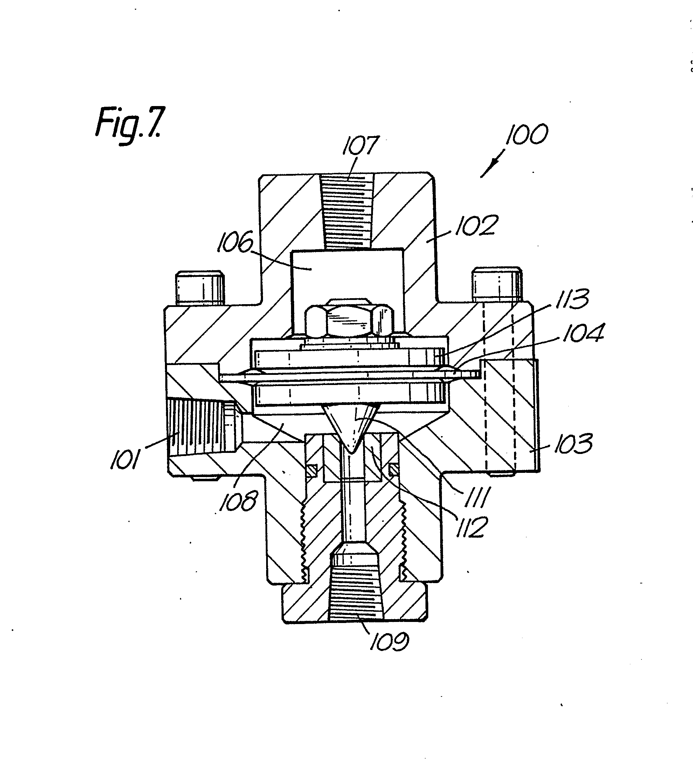

The three-way ball valve 49 includes an outlet port 50 which is connected to an inlet 101 of the pressure relief valve 100 illustrated in more detail in Figure 7. The pressure relief valve 100 includes an upper domed body portion 102 and a lower body portion 103, a movable wall member in the form of a flexible diaphragm 104 being trapped between the upper body portion 102 and the lower body portion 103. A chamber 106 is provided in the upper body portion 102 and communicates with a second inlet 107. A chamber 108 is provided in the lower body portion 103 and is connected to an outlet 109 via a needle valve 111 the needle portion of the needle valve 111 being mounted to the diaphragm 104. The needle valve 111 includes a valve seat 112 and movement of the diaphragm 104 is limited by engagement of rigid supports 113 with respective shoulders formed in the body portions 102 and 103.

The inlet 107 is connected so as to receive oil from the pipeline or alternatively connected simply to receive the pressure of the pipeline by means of some isolating mechanism. In practice it is sufficient to apply pipeline oil direct to the inlet 107.

The apparatus thus far described is operated as follows. Before a sample is grabbed the apparatus is in the configuration shown in Figure 1. Oil passes through the pipeline in the direction of the arrow A in Figure 1 and it is clear from Figure 1 that the oil will pass into the inlet tube 23 and thence through the chamber 18 and out of the outlet 22. Because the inlet tube 23 extends upstream of the remainder of the apparatus, it is beyond the flow disturbed region around the probe itself and the oil entering the tube 23 should flow in an undisturbed fashion. The constitution of the oil passing through the chamber 18, therefore, exactly reflects the composition of the oil at that position in the pipeline.

The pneumatic actuator body consists of the upper body, 60, the lower body 61 and the liner 62. The upper body and lower body are clamped together.

The lower piston 63 carries an O ring 64 which seals the lower piston 63 to the liner 62. The lower piston 63 is bolted to the lower piston rod 65. The lower piston rod 65 is threaded internally at its lower end. The tubular sleeve 27 is screwed into the lower piston rod 65. The lower body 61 carries an O ring 66 which seals the lower body 61 to the lower piston rod 65.

The upper piston 67 carries an O ring 68 which seals the upper piston 67 to the liner 68. The upper piston 67 is bolted to the upper piston rod 69. The tubular piston 29 is attached to the upper piston rod 69 by means of the split collet 70. The upper piston rod 69 is threaded externally at its upper end. The piston head 96 is screwed onto the upper piston rod 69. The upper body 60 carries an O ring 71 which seals the upper body 60 to the upper piston rod 69.

The apparatus is normally controlled to withdraw a sample from the pipeline up to a maximum of one per second.

At the beginning of the sampling cycle the upper piston 67 and the lower piston 63 are both at the top of their respective strokes.

When it is desired to withdraw fluid from the pipeline, air pressure is introduced between the upper and lower pistons. As the upper piston 67 is at the top of its stroke, the lower piston 63 moves down.

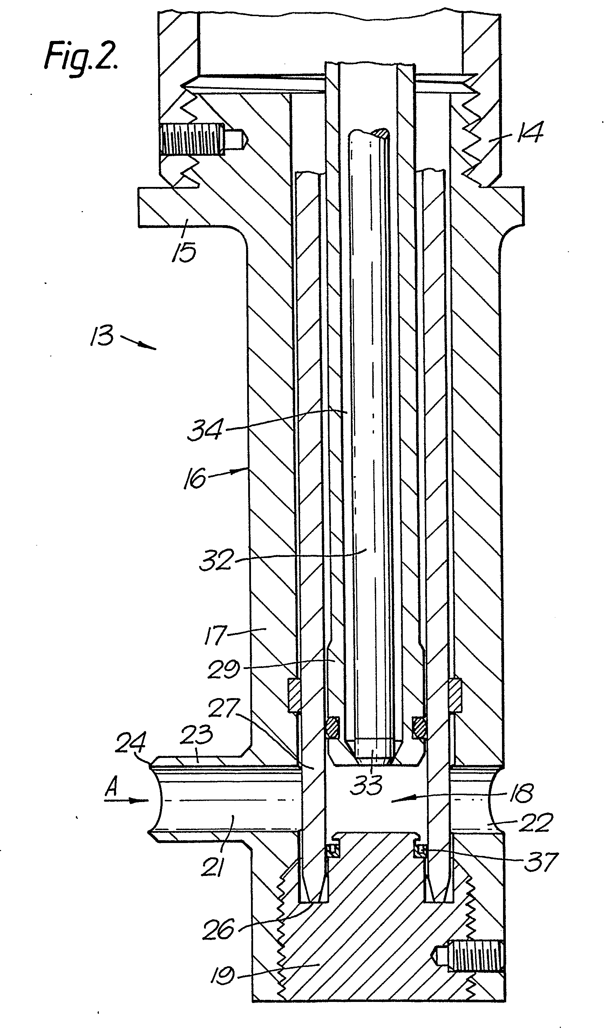

Hence the tubular sleeve 27 is moved downwardly so that its bottom edge 26 passes into the annular slot 36. As it does so it entraps the oil in the chamber 18. The sleeve 27 is then in the position shown in Figures 2 and 6 and it will be seen that the seals 35, 37, seal with the sleeve 27 to prevent escape of the oil within the chamber 18. The lower piston 63 is then at the bottom of its stroke.

Air pressure is then introduced above the upper piston 67. The upper piston 67 moves down, because the air between the two pistons is vented.

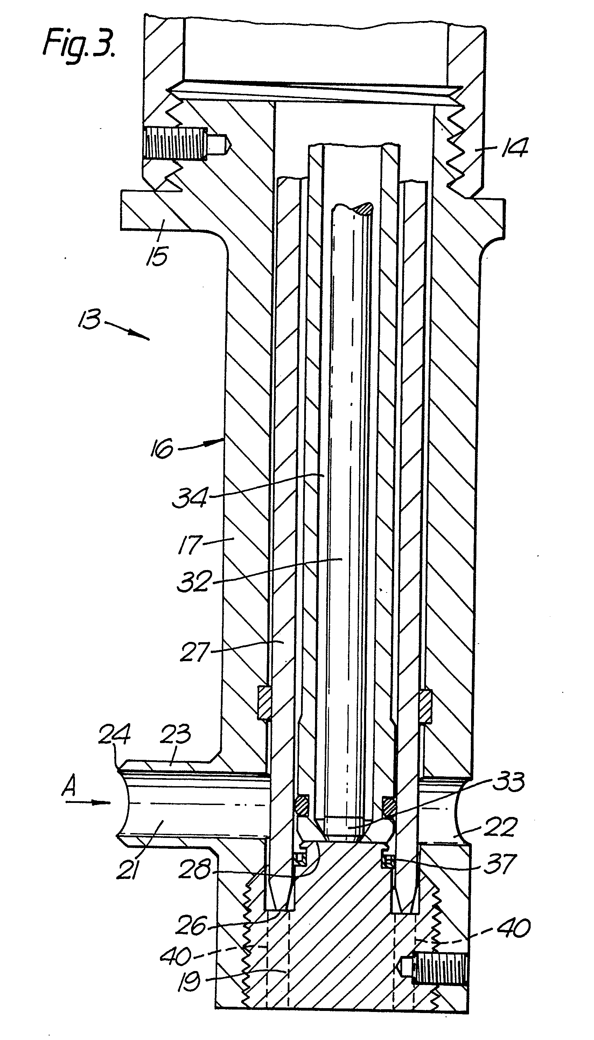

Hence the tubular piston 29 and valve stem 32 are moved downwardly in unison. As the tubular piston 29 and valve member 33 move down together, the oil sample in the chamber 18 exerts a back pressure on the valve stem 32 which overcomes a resistance of the spring 59 so that the valve stem 32 rises breaking the seal between the valve member 33 and the bottom edge 28 of the tubular piston 29. Sample oil in the chamber thus flows into the annular passage 34. This causes oil already in the annular passage 34 to pass out of the outlet port 48 in the piston head 46 and thence to the ball valve 49 and the pressure relief valve 100. Eventually the bottom edge 28 of the tubular piston 29·reaches·the bottom face 31 of the chamber 18 and the motion ceases. The light spring 59 will then cause the valve stem 32 to be lowered into engagement with the bottom edge 28 of the tubular piston 29 and the various parts are then in the position illustrated in Figure 3. The lower piston 63 is then at the bottom of its stroke. It will be understood, therefore, that by this means the oil entrapped in the chamber 18 has been passed into the annular passage 34 which thereby provides an oil sample outlet and thence out of the pipeline.

It will be understood that the sample oil applied to the inlet 101 of the pressure relief valve 100 will be substantially at the pressure in the pipeline (plus additional pressure involved in passing the oil to that point) and it is desired to provide the sample oil out of the outlet 109 at a substantially lower pressure. Pipeline pressure may be, for example, 650 psi. Pipeline pressure is removed from the sample because pressure is applied to the side of the diaphragm opposite that of the sample oil and so the oil sample is provided at the outlet 109 at a low pressure.

The tubular sleeve 27, tubular piston 29 and valve stem 22 are then withdrawn to the position of Figure 1 whence the cycle may recommence.

This is achieved by introducing air pressure underneath the lower piston 63. As the lower piston 63 moves upwards it strikes the upper piston 67 and they both then move upwards together to the top of their respective strokes, the air pressure above the top piston being vented at the same time.

Figures 5 and 6 illustrate how the sampler probe 13 may be withdrawn from the pipeline. As can be seen, because the sampler section 16 has an axis which is offset with respect to the remainder of the sampler probe 13, when the sampler section 16 is withdrawn through the hole 11, the inlet tube 23 can also be withdrawn through the hole 11.

If a blockage occurs (eg crude oil waxing after long standing period) or dirt is trapped at the bottom of the annular passage 34 it must be purged or the valve member 33 and associated parts become dirty and do not seal properly. In which case it becomes necessary to cleanse the valve. Hitherto the cleansing or purging have normally been carried out by withdrawing the whole assembly from the pipeline which has been an expensive and time consuming operation.

In the present arrangement, however, this can be effected very simply. A supply of nitrogen gas (in the case of purging) or solvent under pressure (in the case of cleansing) is connected to the side port 58 of the three-way ball valve 49.

Referring to Figure 6, the plug 51 is undone to a limited extent so that it moves outwardly on the threads 56 (although the 0 ring 52 remian in sealing contact between the plug 51 and the piston head 46). As the plug 51 lifts, the nut 55 engages the circlip 57 and thereby lifts the valve stem 32.

The nitrogen gas or solvent under pressure is passed back through the outlet port 48 and down through the annular passage 34. This drives any oil wax or dirt in the annular passage back into the pipeline and eventually the nitrogen or the solvent reaches the valve member 33 and purges the blockage or cleans the valve, any waste material and the nitrogen or solvent passing into the pipeline. The three-way ball valve is then switched to isolate all ports.

The plug 47 may then be rotated back again so as to lower it into the position shown in Figure 6. The three-way ball valve 49 is switched to connect side port 50 to bottom port 47, whence the normal operation of the apparatus can continue. It will be appreciated therefore that the valve can be cleansed and purged without any necessity for closing down the pipeline.

The arrangement of apparatus described has a number of advantages in addition to those already mentioned. It will be noted that from Figure 1 the oil passes through the chamber 18 in a straight path unlike some prior arrangements in which the path of the oil through the sampling arrangement is by means of a tortuous path.

In addition to the above, when the tubular sleeve 27 is in its lowermost position it seals the inside of the sleeve from the oil pressure and thus the tubular piston 29 and valve stem 32 may be withdrawn entirely for cleaning if desired.

The invention is not restricted to the details of the foregoing example.

CLAIMS

1. A sampler probe for insertion into a pipeline of fluid comprising a probe body for extending into the pipeline, a chamber through which, in use, the fluid in the pipeline passes, said chamber having a fluid inlet and a fluid outlet for communicating with the pipeline, and a fluid sample outlet through which the sampled fluid may be withdrawn from the chamber through the probe body and out of the pipeline, the fluid inlet comprising a tube for extending upstream from the probe body.

2. A sampler probe as claimed in claim 1 in which the upstream edge of the tube is chamfered and the tube is of oval section.

3. A sampler probe as claimed in claim 1 or 2 arranged so that the part thereof containing the chamber and mounting the tube is mounted offset with respect to the axis of the hole in the wall of the pipeline through which the probe may be withdrawn so that the tube may also pass through the hole during withdrawal.

4. A sampler probe as claimed in any of claims 1 to 3 including a sample outlet valve in the fluid sample outlet immediately adjacent the chamber, and means may be provided to open the sample outlet valve from outside the pipeline.

5. A sampler probe as claimed in any of claims 1 to 4 in which wall means is provided to close said fluid inlet and fluid outlet and thereby further define said chamber, means defining a further wall of the chamber being movable into the chamber, said movable wall including a sample outlet valve openable as said wall moves into said chamber, so that fluid trapped within the chamber may pass through said sample outlet valve, through the probe body, and out of the pipeline.

6. A sampler probe as claimed in claim 5 in which the sample outlet valve is sprung·loaded to the closed position whereby as said wall moves into said chamber the pressure of the fluid within the chamber overcomes the pressure of the spring acting on the sample outlet valve to automatically open the sample outlet valve.

7. A sampler probe as claimed in any of claims 1 to 6 in which the fluid sample outlet communicates with a pressure relief valve.

8. A sampler probe as claimed in claim 7 in which the pressure relief valve comprises a first inlet connected to said fluid sample outlet, a second inlet connected to receive pipeline pressure, a movable wall means being provided between said first and second inlet and controlling a valve, and an outlet connected with said valve, whereby the sample may pass out of said outlet at a low pressure, pipeline pressure having been removed by the pressure regulator.

9. A sampler probe as claimed in claim 1 substantially as hereinbefore described with reference to the accompanying drawings.

Fig.1.

Fig.2.

2/9

0087272

Fig.3.

Fig.4.

14

15

13 →

23

24

0087272

Fig.5.(I)

5/9

42
43

48

46

41

Fig.5.(II)

Fig.5.(II)

Fig.5.(I)

11

10

12

14

15

16

23

Fig.6.(I)

Fig.6.(II)

Fig.6.(II)

Fig.6.(I)

14

17

13

23

Fig.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-3 765 226 (B.R. STRICKLAND et al.)<br>* Column 2, line 67 - column 3, line 3; column 3, lines 5-10; figure 2 * | 1 | G 01 N 1/20 |
| A | US-A-4 018 089 (G. DZULA et al.) | | |
| A | US-A-3 034 359 (E.P. SHAW) | | |
| A | US-A-2 794 344 (W.M. BOREN) | | |
| A | GB-A-1 149 443 (SHELL INT. RESEARCH MAATSCHAPPIJ N.V.) | | TECHNICAL FIELDS SEARCHED (Int. Cl. ³)<br><br>G 01 N |

The present search report has been drawn up for all claims

| Place of search THE HAGUE | Date of completion of the search 24-05-1983 | Examiner MORRELL D.M. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO Form 1503. 03.82